Europäisches Patentamt

European Patent Office

Office européen des brevets

(11) Publication number: **0 163 740**
**B1**

## EUROPEAN PATENT SPECIFICATION

(45) Date of publication of patent specification: **10.05.89**

(51) Int. Cl.⁴: **G 06 F 9/38**

(21) Application number: **84904162.9**

(22) Date of filing: **08.11.84**

(86) International application number:
**PCT/JP84/00535**

(87) International publication number:
**WO 85/02279 23.05.85 Gazette 85/12**

(54) Pipeline control system.

(30) Priority: **11.11.83 JP 212021/83**
**30.11.83 JP 225623/83**

(43) Date of publication of application:
**11.12.85 Bulletin 85/50**

(45) Publication of the grant of the patent:
**10.05.89 Bulletin 89/19**

(84) Designated Contracting States:
**DE FR GB**

(56) References cited:
**EP-A-0 036 093**
**EP-A-0 066 376**
**JP-B-45 006 474**
**JP-B-50 009 621**
**US-A-4 200 927**

(73) Proprietor: **FUJITSU LIMITED**
**1015, Kamikodanaka Nakahara-ku**
**Kawasaki-shi Kanagawa 211 (JP)**

(72) Inventor: **ONISHI, Katsumi**
**2-137, Simoshingashi**
**Kawagoe-shi Saitama 356 (JP)**
Inventor: **OINAGA, Yuji**
**28-15, Kamiuma 4-chome**
**Setagaya-ku Tokyo 154 (JP)**
Inventor: **OTSUYAMA, Kohei**
**Matsuda-Apart. 3-27-13, Okusawa**
**Setagaya-ku Tokyo 158 (JP)**

(74) Representative: **Muir, Ian R. et al**
**HASELTINE LAKE & CO. Hazlitt House 28**
**Southampton Buildings Chancery Lane**
**London WC2A 1AT (GB)**

## Description

The present invention relates to a pipeline control system.

A pipeline control system data processing unit, which carries out processes from instruction fetch to execution of the relevant instruction by pipeline control, is now being used. The operation of a data processing unit with a pipeline control system of this type is attended by problems of how to reduce a "waiting" condition which is generated when data or an instruction does not exist in a cache memory, and how to execute alteration processing smoothly when an instruction sequence is altered due to establishment of a branching condition or an interruption.

The "waiting" condition problem can be solved to a certain degree by increasing the capacity of the cache memory, but a key point for alteration processing of an instruction sequence is how to quickly read a branching address instruction following a branching instruction.

Meanwhile, in case of forming a certain logical functions with recent trend to high density integration of logical circuits, when a number of logical elements increases, if constitution of hardware which can reduce a number of input/output terminals of said logical block can be realized, performance of the system as a whole can be improved.

A prior art system will first be explained, and problems of this prior art system discussed.

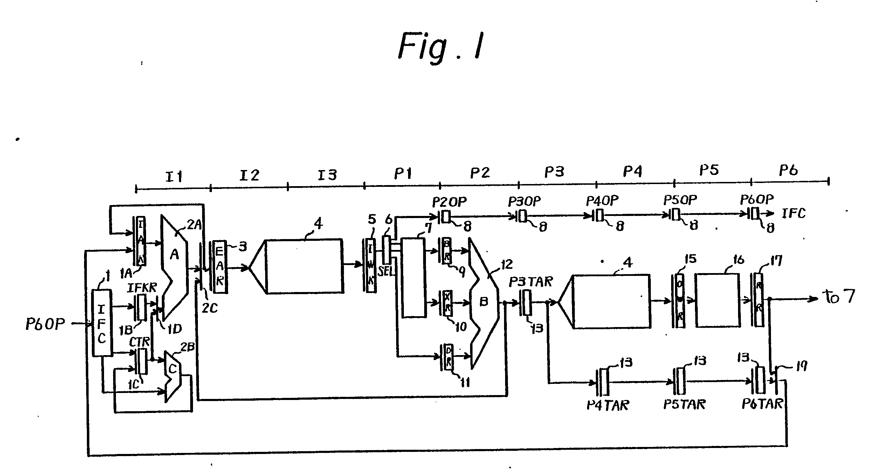

Fig. 1 is a schematic profile of pipeline operation in a data processing unit with a pipeline control system of the prior art. In this Figure, I1 to I3 are instruction fetch pipeline stages, while P1 to P6 are instruction execution pipeline stages, namely stages for operand fetch and calculation.

General operations of this data processing unit with pipeline control will be explained by referring to Fig. 1.

First, the heading address of a program to be executed is set in an instruction address register (hereinafter referred to as IAR) 1A from a service processor (not shown), in pipeline stage I1 of this data processing unit. In this case, "0" is set in an instruction fetch constant register (hereinafter referred to as IFKR) 1B, so the content of IAR 1A is directly set in an execution address register (hereinafter referred to as EAR) 3, through an adder (A) 2A, in the stage I2. A cache memory 4 is accessed by EAR 3 and thereby the relevant instruction is read to an instruction word register (hereinafter referred to as IWR) 5 at the end timing of stage I3.

After the first instruction read operation as explained above, a fixed value "8" is set in IFKR 1B from an instruction fetch control part (IFC) 1, and is added to the content of IAR 1A by the adder (A) 2A, the execution address is calculated and is then set in EAR 3. As a result, instruction read to IWR 5 is carried out in units of 8 bytes.

IWR 5 is generally composed of a multi-stage shift register and a boundary address of the plural instructions stored in the IWR 5 can be indicated by a pointer register (not shown).

A selector (SEL) 6 selects an instruction to be executed in the pipeline in accordance with the address indicated by the pointer register.

When the relevant instruction is selected by the selector (SEL) 6 at pipeline stage P1, the operation code area of said instruction is shifted to operation code registers P20P to P60P (8), corresponding to stages P2 to P6 and used when the instruction is executed at respective stages of the pipeline.

A register designation area of the instruction is decoded, a general purpose register is accessed by the resulting decoded address, and a base address and an index value are respectively read to a base register (BR) 9 and an index register (XR) 10.

A displacement designation area of the instruction is set in a displacement register (DR) 11.

At stage P2, the content of base register (BR) 9, the content of index register (XR) 10 and the content of displacement register (DR) 11 are subject to calculation in an adder (B) 12, an operand address is thereby calculated and then stored in an address register (P3TAR) 13 of stage P3 and operand fetch is effected by making access to cache memory 4.

The result of the operand fetch is read into an operand word register (0WR) 15 at the end timing of stage P4, is subject to calculation by operation circuit (arithmetic circuit) 16 in the next stage P5, and the calculation result is set into a result register (RR) 17 at the initial timing of stage P6 and is stored in general purpose register 7 in the same stage P6.

At stage P1 mentioned above, the following operations are carried out in addition to the instruction execution address calculation as explained above.

When the instruction execution address is calculated, a fixed value (for example, "8") set in the instruction fetch constant register (IFKR) 1B is accumulated by the counter (CTR) 1C for each addition at the adder 2A.

The operation code of an instruction extracted from the pipeline is detected by the instruction operation part register (P60P) in stage P6 and is sent to instruction fetch control part (IFC) 1. Thereby, the length of the instruction extracted from the pipeline (number of bytes) can be detected and it is subtracted from a value accumulated in the counter (CTR) 1C by the adder (C) 2B.

As a result, the counter (CTR) 1C contains an indication of the length of all instructions being processed in the pipeline and this means that [IAR 1A] - [Counter(CTR) 1C] =

address of instruction in the stage P6.

Here [IAR 1A] means the content of the instruction address register (IAR) 1A and [Counter(CTR 1C] means the content of counter (CTR) 1C.

The reason why knowledge of this value is necessary will be explained below.

· When this value is to be determined, this is done by subtracting the content of counter (CTR) 1C from that of IAR 1A in the adder (A) 2A.

In the prior art described above the instruction address register is used in common both for reading an instruction and for use in indicating the address of an instruction being executed in the pipeline as explained above.

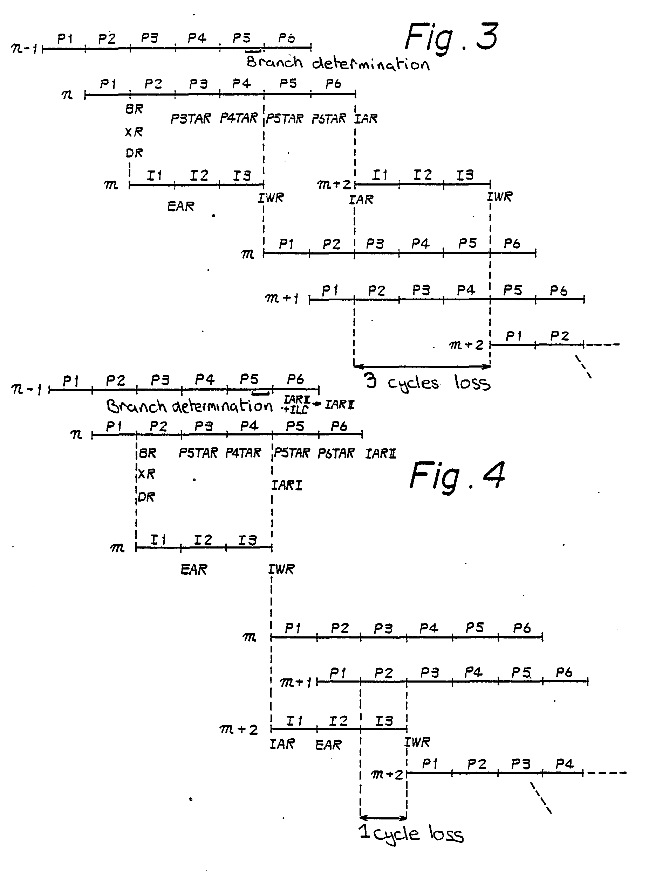

Operations for a general instruction have been outlined above, and operations relating to a branching instruction, of concern to the present invention, will be explained below by referring to the time chart of Fig. 3.

When an instruction (indicated by n in Fig. 3) read by IWR 5 is a branching instruction, the operand address calculated by the adder (B) 12 indicates the branching address. This address (the branch target address) is stored in target registers P3TAR to P6TAR at respective stages P3 to P6 and then shifted. Simultaneously the branching address (branch target address) is set in EAR 3 through OR circuit 2C at stage P2 (corresponding to stage I1 in the processing of the branching address instruction). Thereafter cache memory 4 is accessed to read branching address instructions (indicated by m, m+1, ..... in Fig. 3).

At stage P4 (in terms of operation of instruction n), operation of the instruction (indicated as n-1) immediately preceding the branching instruction is being carried out (the instruction n-1 is at stage P5 when instruction n is at stage P4). If branching conditions are determined by the result of operation, the branching address instruction being accessed is read to the IWR 5 and the branching instruction is executed at the respective stages of P1 to P6.

In the time chart of Fig. 3, operations in the pipeline (at stages P1 to P6) of the branching address instruction (here, the 8 bytes read in this case are assumed to be two 4-byte instructions) are indicated by m and m+1.

In the prior art system, a branching address instruction m+2 can be read as follows: The branching address stored in the target register P6 TAR at stage P6 of the branching instruction n is set in the IAR 1A through the OR circuit 19, a value of IFKR IB ("8") is added in the adder (2) A at stage I1 of said branching address instruction, an execution address 8 bytes beyond the address of branching address instruction m, is set in EAR 3 at stage I2, and thus the branching address instruction m+2 can be read by making access to the cache memory 4.

In the prior art system, processings are executed at stages I1 to I3, in order to read the m+2 branching address instruction, after processing of the branching instruction n at stage P6. Since the m+2 instruction is only thereafter executed at stages P1 to P6, as is apparent from the time chart of Fig. 3, the execution is delayed by 3 cycles from the m+1 instruction.

The prior art suffers no problem in relation to the execution timing of a branching address instruction which is read in advance in a case in which the branching condition is established by executing the branching instruction, but suffers a problem in relation to the timing of reading, from the cache memory, of the branching address instruction 8 bytes on (in practice, only after execution of branching instruction n reaches stage P6, does stage I1 of the branching address instruction m+2 start).

As explained above, the branching address must be held by the target registers P3 TAR to P6 TAR until the branching instruction n reaches stage P6, because it is checked whether or not there has been an interruption during execution of the branching instruction n in the stage P6 and the operation result is also checked. Accordingly, the content of IAR 1A cannot be changed at least until the branching instruction n has been extracted from the pipeline.

For example, in a case in which an error is detected in stage P6, execution of the branching instruction n is invalidated and therefore the instruction n must be retried, and it is essential to be able to obtain the retry address from IAR 1A.

The controversial points of the prior art system can be summarized as follows. A time delay is generated for reading the instruction 8 bytes after the branching address, because the same instruction address register is used both for reading instructions and for indicating instructions under execution in the pipeline, and the address of the branching instruction must be held by some means until the branching instruction is completed even after the branching instruction is branched, because it is possible that an interruption or an error may be generated during pipeline processings.

A route the result register (RR) 17 to the OR circuit 19 is used for example when branching is carried out by a load PSW (program status word) instruction.

EP-A-0 036 093 relates to a non-pipelined single chip information processing system in which user's instructions are prefetched from main memory. When a program branch is effected, prefetched instructions are made ineffective and new instructions fetched.

In view of such disadvantages of the prior art system described with reference to Figs. 1 and 3, it is an object of the present invention to provida a system for reading at a high speed the instruction 8 bytes after the branching address generated when a branching instruction is executed in a data processing pipeline control system.

Moreover, it is also an object of the present invention to provide a structure offering a reduced number of instruction word buffer registers but still capable of handling continuously generated branching instructions in the pipeline control system data processing unit.

According to the present invention, there is provided a pipeline control system, in a data processing unit, having a pipeline in which a plurality of stages are serially connected and instructions, including branching instructions, are processed by shifting through stages of the pipeline, the system comprising:

first means for holding an address for fetching an instruction next to be processed by the pipeline from memory means via access means, and for providing the address of the instruction currently being processed at the final stage of the pipeline, for retrying that instruction,

second means, in a specific stage of the pipeline, for calculating a branch target address in response to a branching instruction and prefetching the branch target instruction from the branch target address from the memory means via the access means, and

third means for incrementing the branch target address by a predetermined amount to provide an incremented branch target address for fetching a next branch instruction, next after the said branch target instruction, using the first means, characterised in that

the first means comprise a first storage means for holding an address for fetching an instruction next to be processed by the pipeline, which first storage means is provided separately from a second storage means for holding information for providing the address of the instruction currently being processed at the final stage of the pipeline, and in that

the third means are operable to replace the contents of the first storage means with the incremented branch target address, for prefetching the said next branch instruction, before the branching instruction has passed through the pipeline.

When branching instructions are generated continuously, such object is attained by using in common said instruction word buffer registers, focusing on the fact that the object instructions are executed in serial.

The present invention has an advantage that since the instruction address register unit for reading instructions and the instruction address register unit for indicating the address of an instruction being executed in the pipeline are provided individually, the content of the former instruction address register unit can be updated when branching at a branching instruction is determined.

Briefly, according to the present invention, an instruction address register unit for reading instructions and an instruction address register unit used for indicating address of an instruction being executed in the pipeline are provided independently, the address of a branching instruction is held by the latter instruction address register unit until that instruction passes through the pipeline, and the content of the former instruction address register unit can be updated when branching at the branching instruction is determined and delay for reading a branch address instruction 8 bytes after the branching address is reduced.

## BRIEF DESCRIPTION OF THE DRAWINGS

Fig. 1 is a schematic diagram illustrating pipeline operation of a prior art system.

Fig. 2 is a schematic diagram illustrating pipeline operation of a system of embodying the present invention.

Fig. 3 is a time chart illustrating operation in a case in which a branching instruction is executed in the pipeline of the prior art system.

Fig. 4 is a time chart illustrating operations when the branching instruction is executed in the pipeline of an embodiment of the present invention.

Fig. 5 illustrates an example of a constitution of instruction buffer registers, considering continuous generation of branching instructions.

Fig. 6 illustrates a structure applied in an embodiment of the present invention whereby the constitution shown in Fig. 5 is improved.

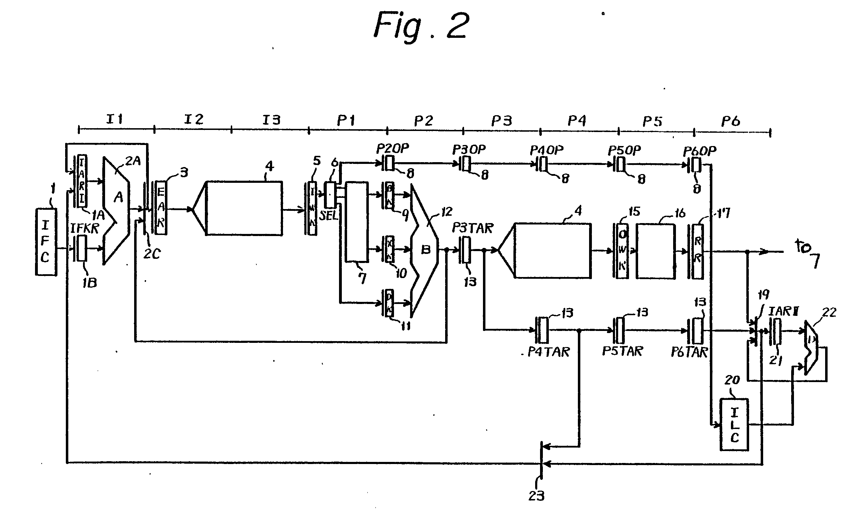

An embodiment of the present invention will now be described in detail by referring to the drawings. Fig. 2 is a block diagram of an embodiment of the present invention. Fig. 4 relates to the embodiment of Fig. 2 and is a time chart of operations when a branching instruction is executed.

In Fig. 2, items indicated by reference signs 1A, 1B, 2A, 2C, and 3 to 19 are the same as the items indicted by those reference signs in Fig. 1. 20 to 23 are logical blocks provided for carrying out the present invention, constituting an instruction address register unit II which is used for indicating the address of an instruction being executed in the pipeline. Namely, 20 is an instruction length generating circuit (ILC), 21 is an instruction address register II (IAR II), and 22 is an adder D. 23 is an OR circuit.

In Fig. 2, as in the case of Fig. 1, each constitution is used in such a timing that respective processings are executed in the stages I1, I2, I3, P1, P2, P3, P4, P5 and P6. The hardware constitution in the one embodiment of the present invention is essentially the same as that shown in Fig. 2, except for that the cache memory 4 is shown in overlapping. It is a matter of course that two cache memories 4 can be constituted as shown in Fig. 2.

When the present invention is put into practice, it should be noted, the instruction address register unit II is constituted separately from instruction address register unit I (the latter unit using instruction address register (IAR I) 1A).

A general pipeline operation in this embodiment of the present invention is the same as in the prior art system of Fig. 1. With reference to the time chart of Fig. 4, operation of this embodiment of the present invention will be explained for a case in which a branching instruction is executed.

In the embodiment of the present invention, the heading address of a program to be executed is first set in the two instruction address registers I, II [IAR(I) 1A, IAR(II) 21] from a service processor (not shown) at stage I1 of the pipeline of the data processing unit.

The instruction address register (IAR I) 1A operates as in the prior art system. However, in the instruction address register II (IAR II) 21, instruction length of an instruction is generated in the instruction length generating circuit (ILC) 2O for each completion of execution of an instruction and it is added to the instruction address register II (IAR II). Therefore, the address of the oldest instruction of instructions being executed by the pipeline (in the pipeline) can be indicated.

Accordingly, even when a branching instruction is executed, the address of the branching instruction is held in the instruction address register II (IAR II) 21, until the branching instruction runs through the pipeline.

In a similar way to the explanation given in relation to Figs. 1 and 3 for the prior art system, the embodiment of the present invention will be explained by referring to Fig. 4, with a branching instruction indicated by n and branching address instructions by m, m+1, m+2.

When an instruction (indicated as n) read to IWR 5 is a branching instruction, the operand address calculated in the adder (B) 12 indicates the branching address. This branching address or branch target address is stored in the target registers P3 TAR to P6 TAR and shifted in stages P3 to P6 and the branching address is set in EAR 3 through OR circuit 2C in stage P2 (stage I1 for the branching address instruction). Thereafter, the cache memory 4 is accessed and a branching address instruction (indicated as m, m+1,.....) is read.

In stage P4 (in relation to instruction n), it is assumed that operation of the instruction (n-1) just before the branching instruction is carried out (namely, in stage P5 in terms of the instruction (n-1)) and the branching condition is determined by the result of such operation. The branching address instruction being accessed is read to IWR 5 at the end timing of stage I3, and execution of stages P1 to P6 of the branching address instruction is carried out.

In the time chart of Fig. 4, operations in the pipeline (stages P1 to P6) of the branching address instruction (the 8 bytes read at this time should be considered as two 4-byte instructions) are indicated by m and m+1.

As is apparent from the Figure, operations up to this stage are the same as those in the prior art system.

When reading the succeeding branching address instruction m+2, at the stage P4 of the branching instruction n, in the present invention, the branching address stored in the target register P4 TAR is set in IAR (I) 1A through OR circuit 23, a value (" 8") of IFKR 1B is added in adder (A) 2A at stage I1 of branching address instruction m+2 and an execution address 8 bytes beyond the address of branching address instruction m is set EAR 3 at the stage I2.

Therefore, when the present invention is applied, since execution of stages I1 to I3 for reading the m+2 branching address instruction is started at the end timing of stage P4 of branching instruction n, delay is not generated between reading operation in relation to branching address instructions m, m+1 (namely, stages I1 to I3) and the reading operation in relation to instruction m+2 8 bytes after said branching address instruction m (stages I1 to I3). Thereafter, stages P1 to P6 of the m+2 instruction are executed and thereby, as is apparent from the time chart of Fig. 4, delay from the m+1 instruction is reduced to only one cycle.

When the present invention is applied as explained above, the address of the m+2 instruction is set in IAR (I) 1A in order to start execution of stages I1 to I3, for reading the branching address instruction m+2, at stage P4 of branching instruction n and the address of branching instruction n is destroyed before completion of the branching instruction. However, since the address of the branching instruction n is held in the instruction address register II (IAR II) 21 until the branching instruction n passes through stage P6 as explained above, if an error is detected in stage P6 and if it is required to retry the branching instruction n, it can be read again by setting the content of said instruction address register II (IAR II) 21 in the instruction address register I (IAR I) 1A through adder (D) 22, and OR circuits 19 and 23.

According to the present invention, as explained above, cycle loss generated in a pipeline can be reduced even when branching conditions are determined, and a branching instruction can be processed at a high speed.

Although not illustrated in Fig. 3 or Fig. 4, while the branching address instructions m, m+1 are being read, instructions succeeding the branching instruction n (e.g. instructions n+1, n+2,.....) are sequentially applied to the stage P1 for the case where the branching conditions are not determined to be met by the branching instruction n. For example, in Fig. 4, when the branching conditions are determined to be met in the stage P4 of branching instruction n, the instructions n+1, n+2, n+3 which have been input are cancelled and the branching address instruction m is input to the stage P1. In this case, however, where branching conditions are not met, the instructions n+1, n+2, n+3, etc., which have been buffered to the instruction word register IWR 5 are input to the pipeline.

In the above description relating to Fig. 1 and Fig. 3, the instruction word register (IWR) 5 is described merely as being generally composed of a multistage shift register. However, when a branching instruction n appears as shown in Fig. 4, it is desirable that an instruction word register for setting instructions n+1, n+2,....., which apply when branching is not successful, is provided together with an instruction word register for setting branching address instruction m when branching is successful, so that any desired instruction can be extracted. Moreover, individual instruction word registers are also prepared for a case in which branching instructions appear in succession.

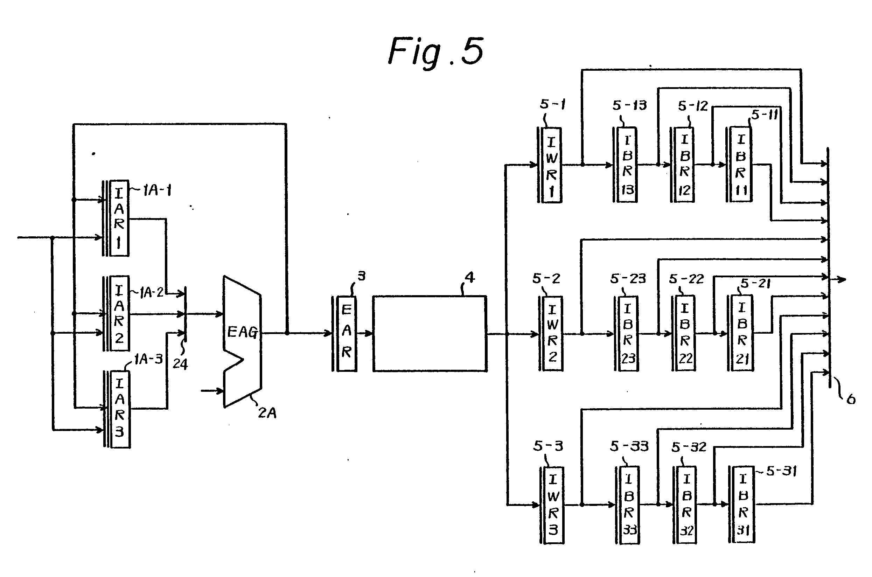

In consideration of this point, the instruction address register (IAR I) 1A and the instruction word register (IWR) 5 shown in Fig. 1 are overlapped in parallel as shown in Fig. 5. In this Figure, items 2A, 3, 4, 6 correspond to the items designated by those reference signs in Fig. 2. Moreover, 1A-1 to 1A-3 are instruction address registers corresponding to instruction address register (IAR I) 1A shown in Fig. 2, 5-1 to 5-3 are instruction word registers corresponding to instruction word register (IWR) shown in Fig. 2, 5-13 to 5-11 are instruction word buffer registers located at successive stages of instruction word register 5-1, 5-23 to 5-21 are instruction word buffer registers located at successive stages of instruction word register 5-2, 5-33 to 5-31 are instruction word buffer registers located at successive stages of instruction word register 5-3, and 24 is a selector.

For instructions other than a branching instruction, as explained with reference to Fig. 1, the execution address determined by IAR 1A-1 and adder 2A is set to the EAR 3 and an instruction read from the cache memory 4 is set in IWR 5-I based on the execution address. As instruction fetch operations continue, the instruction set in IWR 5-1 is shifted to the instruction word buffer register (IBR 13) 5-13, and instructions are shifted sequentially through the instruction buffer registers IBR 5-13, IBR 5-12, IBR 5-11 with the instruction newly read from the cache memory 4 set in IWR 5-1, and this instruction is sent to the pipeline through the selector 6.

When a branching instruction appears, a train of instructions are held in the IWR 5-1, IBR 5-13, IBR 5-12, IBR 5-11 relating to a case in which branching is not successful, regardless of whether branching is successful or not successful at the relevant branching instruction. A train of instructions relating to successful branching are obtained on the basis of the content of IAR 1A-2 and are held in the IWR 5-2, IBR 5-23, IBR 5-22, IBR 5-21. In a case in which another branching instruction appears consecutively, a train of necessary instructions is held in the IWR 5-3, IBR 5-33, IBR 5-32, IBR 5-31.

However, in the case of structure shown in Fig. 5, the instruction word buffer register (IBR) becomes large and complicated in terms of circuitry and the constitution of selector 6 is also complicated.

As is explained with reference to Fig. 4, when a pipeline system constitution as shown in Fig. 2 is employed, it is determined at stage P4 of the branching instruction n whether or not branching corresponding to the branching instruction n is successful. The timing of this is just one cycle before the stage P1 of relevant branching address instruction m, being the branching address instruction m in a case in which branching is successful. This timing is just one cycle before stage I1 of the relevant branching address instruction m+2.

Namely, if branching is successful, the instructions n+1, n+2, n+3 which are fetched on the supposition that branching will not be successful when the branching address instruction m is set to the instruction word register IWR 5-2 are cancelled.

On the other hand, if branching is not successful, instructions are fetched on supposition that branching may be carried out are cancelled after the instruction m is set to the instruction word register IWR 5-2.

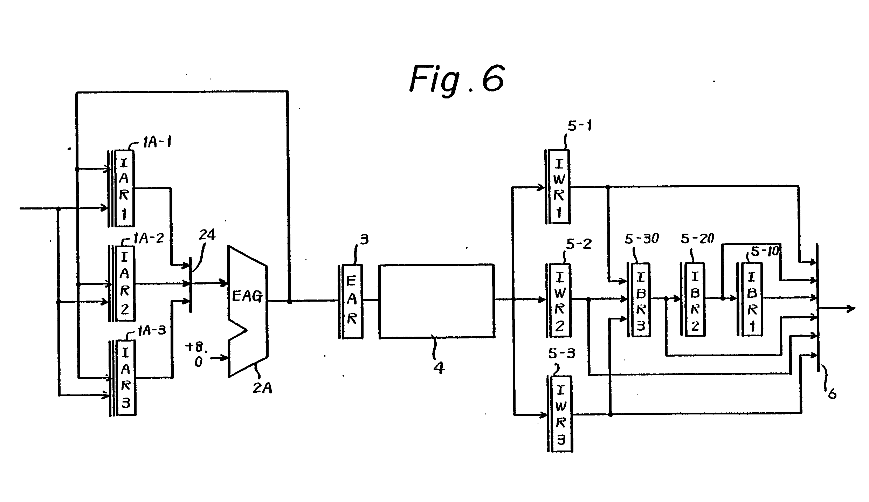

Fig. 6 shows the constitution of an embodiment of the present invention offering improvement over that shown in Fig. 5. Here, the time at which it can be judged whether branching is successful or not successful is an important consideration.

In Fig. 6, items 1A-1 to 1A-2, 2A, 3, 4, 5-1 to 5-3, 6, 24 correspond to items indicated by those reference signs in Fig. 5, and 5-30, 5-20, 5-10 are instruction word buffer registers.

When the constitution of Fig. 2 is employed, whether branching is successful or not successful is determined with a timing such that instructions n+4, n+3, n+Z, n+1 for unsuccessful branching are sequentially located in IWR 5-1, IBR 5-30, IBR 5-20, IBR 5-10 and the instruction m for successful branching is located in IWR 5-2. Therefore, the provision of instruction word buffer registers IBR can be reduced to a so-called single system by employing the constitution shown in Fig. 6.

Even in a case in which branching occurs continuously, successful or unsuccessful branching of successive branching instructions can be determined at a timing when a heading instruction for a successful branching is located in the register IWR 5-3, with a train of instructions for unsuccessful branching corresponding to the branching instruction appearing successively in the registers IWR 5-2, IBR 5-30, IBR 5-20, IBR 5-10.

**Claims**

1. A pipeline control system, in a data processing unit, having a pipeline in which a plurality of stages (I1 to I3, P1 to P6) are serially connected and instructions, including branching instructions, are processed by shifting through stages of the pipeline, the system comprising:

first means (1A, 21) for holding an address for fetching an instruction next to be processed by the pipeline from memory means (4) via access means (2C, 3), and for providing the address of the instruction currently being processed at the final stage (P6) of the pipeline, for retrying that instruction,

second means (9, 10, 11, 12), in a specific stage of the pipeline, for calculating a branch target address in response to a branching instruction (n) and prefetching the branch target instruction (m, m+1) from the branch target address from the memory means (4) via the access means (2C, 3), and

third means (13, 1B, 2A) for incrementing the branch target address by a predetermined amount to provide an incremented branch target address for fetching a next branch instruction (m+2), next after the said branch target instruction (m, m+1), using the first means, characterised in that

the first means (1A, 21) comprise a first storage means (IAR I, 1A) for holding an address for fetching an instruction next to be processed by the pipeline, which first storage means is provided separately from a second storage means (IAR II, 21) for holding information for providing the address of the instruction currently being processed at the final stage (P6) of the pipeline, and in that

the third means are operable to replace the contents of the first storage means (IAR I, 1A) with the incremented branch target address, for prefetching the said next branch instruction (m+2), before the branching instruction (n) has passed through the pipeline.

2. A pipeline control system as claimed in claim 1, wherein the second storage means (IAR II, 21) is preset with the address of the first instruction to be processed by the pipeline, and incremented with the length of each instruction propagating out through the final stage (P6) of the pipeline, so that the incremented address indicates the address of the instruction at the final stage (P6) of the pipeline.

3. A pipeline control system as claimed in claim 2, wherein the length of each instruction is obtained by detecting the corresponding operation code propagated through the pipeline.

4. A pipeline control system as claimed in claim 1, 2 or 3, wherein said replacement of the contents of the first storage means (IAR I, 1A) is effected with a timing corresponding to the branch instruction (n) having reached a stage in the pipeline at which it has been determined whether or not a branch condition of the branch instruction has been satisfied.

## Patentansprüche

1. Pipeline-Steuersystem, in einer Datenverarbeitungseinheit, die eine Pipeline hat, bei der eine Vielzahl von Stufen (I1 bis I3, P1 bis P6) in Reihe verbunden sind, und Instruktionen, die Verzweigungsinstruktionen enthalten, durch Verschieben durch die Stufen der Pipeline verarbeitet werden, welches System umfaßt:

erste Einrichtungen (1A, 21) zum Halten einer Adresse zum Abrufen einer Instruktion, die als nächste durch die Pipeline verarbeitet werden soll, über Zugriffseinrichtungen (2C, 3) von der Speichereinrichtung (4), und um die Adresse der Instruktion, die gegenwärtig verarbeitet wird, an die Endstufe (P6) der Pipeline zu liefern, um jene Instruktion zu wiederholen,

zweite Einrichtungen (9, 10, 11, 12), in einer spezifischen Stufe der Pipeline, zum Berechnen einer Verzweigungszieladresse, in Abhängigkeit von einer Verzweigungsinstruktion (n), und zum Vorabrufen der Verzweigungszielinstruktion (m, m+1) von der Verzweigungszieladresse von der Speichereinrichtung (4), über die Zugriffseinrichtung (2C, 3), und

dritte Einrichtungen (13, 1B, 2A) zum Erhöhen der Verzweigungszieladresse um einen vorbestimmten Betrag, um eine erhöhte Verzweigungszieladresse für das Abrufen einer nächsten Verzweigungsinstruktion (m+2), die nächste nach der genannten Verzweigungszielinstruktion (m, m+1), unter Verwendung der ersten Einrichtung, dadurch gekennzeichnet, daß

die erste Einrichtung (1A, 21) eine erste Speichereinrichtung (IAR I, 1A) umfaßt, um eine Adresse zu halten, um eine Instruktion abzurufen, die als nächste durch die Pipeline verarbeitet werden soll, welche erste Speichereinrichtung separat von einer zweiten Speichereinrichtung (IAR II, 21) vorgesehen ist, um Information zu halten, um die Adresse der Instruktion zu liefern, die gegenwärtig an der Endstufe (P6) der Pipeline verarbeitet wird, und daß

die dritte Einrichtung betreibbar ist, um den Inhalt der ersten Speichereinrichtung (IAR I, 1A) durch die erhöhte Verzweigungszieladresse zu ersetzen, um die nächste Verzweigungsinstruktion (m+2) vorabzurufen, bevor die Verzweigungsinstruktion (n) durch die Pipeline hindurchgelangt ist.

2. Pipelinesteuersystem nach Anspruch 1, bei dem die zweite Speichereinrichtung (IAR II, 21) mit der Adresse der ersten Instruktion, die von der Pipeline verarbeitet werden soll, voreingestellt und mit der Länge von jeder Instruktion erhöht wird, die durch die Endstufe (P6) der Pipeline herauswandert, so daß die erhöhte Adresse die Adresse der Instruktion an der Endstufe (P6) der Pipeline anzeigt.

3. Pipelinesteuersystem nach Anspruch 2, bei dem die Länge von jeder Instruktion durch Detektieren des entsprechenden Operationscode, der durch die genannte Pipeline wandert, erhalten wird.

4. Pipelinesteuersystem nach Anspruch 1, 2 oder 3, bei dem die Ersetzung des Inhalts der ersten Speichereinrichtung (IAR I, 1A) mit einer Zeitberechnung bewirkt wird, welche der Verzweigungsinstruktion (n) entspricht, die eine Stufe in der Pipeline erreicht hat, bei welcher festgelegt worden ist, ob ein Verzweigungszustand der Verzweigungsinstruktion erfüllt worden ist oder nicht.

## Revendications

1. Système de commânde pipeline, dans une unité de traitement de données, comportant un pipeline dans lequel un ensemble d'étages (I1 à I3, P1 à P6) sont connectés en série et des instructions, y compris des instructions de branchement, sont traitées, par decalage dans les tages du pipeline, le système comprenant:

un premier moyen (1A, 21) pour maintenir une adresse destinée à lire une instruction suivante à traiter par le pipeline dans un moyen à mémoire (4) par l'intermédiaire d'un moyen d'accès (2C, 3), et pour fournir l'adresse de l'instruction en cours de traitement au dernier étage (P6) du pipeline, pour faire une tentative de relance de cette instruction,

un deuxième moyen (9, 10, 11, 12), inclus dans un étage spécifique du pipeline, pour calculer une adresse de cible de branchement en réponse à une instruction de branchement (n) et pour préextraire l'instruction de cible de branchement (m,m+1) de l'adresse de cible de branchement du moyen à mémoire (4) par l'intermédiaire du moyen d'accès (2C, 3), et

un troisième moyen (13, 1B, 2A) pour incrémenter l'adresse de cible de branchement d'une quantité prédéterminée en vue de fournir une adresse de cible de branchement incrémentée destinée à lire une instruction de branchement (m+2) suivante, juste après l'instruction de cible de branchement (m,m+1), en mettant en oeuvre le premier moyen, caractérisé en ce que

le premier moyen (1A, 21) comprend un premier moyen de mémorisation (IAR I, 1A) pour maintenir une adresse destinée à lire une instruction suivante à traiter par le pipeline, ce premier moyen de mémorisation étant prévu séparément d'un deuxième moyen de mémorisation (IAR II, 21) pour maintenir des informations destinées à fournir l'adresse de l'instruction en cours de traitement au dernier étage (P6) du pipeline,

et en ce que le troisième moyen peut être mis en fonctionnement pour remplacer le contenu du premier moyen de mémorisation (IAR I, 1A) par l'adresse de cible de branchement incrémentée, destinée à préextraire l'instruction de branchement suivante (m+2), avant que l'instruction de branchement (n) soit passée dans le pipeline.

2. Système de commande pipeline selon la revendication 1, dans lequel le deuxième moyen de mémorisation (IAR II 21) est pré, établi avec l'adresse de la première instruction à traiter par le pipeline, et incrémentée avec la longueur de chaque instruction se propageant hors du dernier étage (P6) du pipeline, de sorte que l'adresse incrémentée indique l'adresse de l'instruction dans le dernier étage (P6) du pipeline.

3. Système de commande pipeline selon la revendication 2, dans lequel la longueur de chaque instruction est obtenue en détectant le code opération correspondant propagé dans le pipeline.

4. Système de commande pipeline selon l'une quelconque des revendications 1 à 3, dans lequel le remplacement du contenu du premier moyen de mémorisation (IAR I, 1A) est effectué avec une synchronisation correspondant à l'instruction de branchement (n) ayant atteint un étage dans le pipeline où il a été déterminé si une condition de branchement de l'instruction de branchement a été ou non satisfaite.

# Fig . I

Fig. 2

Fig. 3

Fig. 4

# Fig.5

EP 0 163 740 B1

Fig.6